# EUROPEAN PATENT APPLICATION

(11) **EP 1 864 919 A1**
(43) Date of publication of application: **12.12.2007**
(21) Application number: 05727407.8
(22) Date of filing: 01.04.2005
(51) Int. Cl.: B65G 1/137, G06K 17/00

(54) **ARTICLE MANAGEMENT SYSTEM**

(71) Applicant: Fujitsu Frontech Limited, Inagi-shi, Tokyo 206-8555 (JP); Fujitsu Ltd., Kawasaki-shi, Kanagawa 211-8588 (JP)
(72) Inventor: HAENO, Tadashi c/o FUJITSU FRONTECH LIMITED, Inagi-shi, Tokyo 2068555 (JP); HASHIMOTO, Shigeru FUJITSU FRONTECH LIMITED, Inagi-shi, Tokyo 2068555 (JP)
(74) Representative: Stebbing, Timothy Charles
(86) International application number: PCT/JP2005/006463
(87) International publication number: WO 2006/114814

(57) **Abstract**

A management PC 11 comprises a polling combination table 11a for storing data (combination data) where a combination of reader/writers, which are not problematic when being polled simultaneously, and a polled flag. The management PC 10 examines combination data of each row by sequentially referencing the polling combination table 11a starting at the first row in the polling process of a reader/writer 13. Then, one or a plurality of reader/writers 13 set in the combination data are concurrently polled. Then, the polled flags of the polled reader/writers are set to "1". After referencing the last row of the polling combination table, the management PC clears the polled flags of all of rows of the polling combination table to "0", and repeats the above described series of operations.

## Description

### Technical Field

The present invention relates to a system for managing an article, and more particularly, to a document managing system using a wireless tag.

### Background Art

Currently, there has been a growing interest in an RFID (Radio Frequency Identification) tag. The RFID tag is one type of a wireless IC tag, and composed of an LSI (Large Scale Integrated circuit) chip, an antenna, external resin that molds the LSI chip and the antenna, and the like. The size (outer diameter) of the RFID tag is various such as 0. 3 mm (a sesame grain size), a coin size of a diameter of 20 to 30 mm, an IC card size, etc. Additionally, there are a battery mounting type and a battery non-mounting type. The former is called an active type tag, whereas the latter is called a passive type tag. The LSI chip included in the RFID tag comprises an antenna, a transmitting/receiving unit, a controlling unit, and a memory.

A unique identification code (unique ID) is stored in the memory, and read by an RFID tag reader/writer (hereinafter referred to simply as a reader/writer). The read of the unique ID of the RFID tag by the reader/writer is made with a wireless communication (wireless contact) via an RFID tag antenna (hereinafter referred to simply as an antenna). Methods of the wireless contact include a radio wave method and an electromagnetic induction method.

The RFID tag is an alternative to a conventional barcode, and expected to be applied to fields such as manufacturing, logistics, retail, etc. Fundamentally, the RFID tag is used by being attached to an article, and its application fields include the inventory management, the traceability, etc. of an article.

A configuration example of a system using an RFID tag is described next.

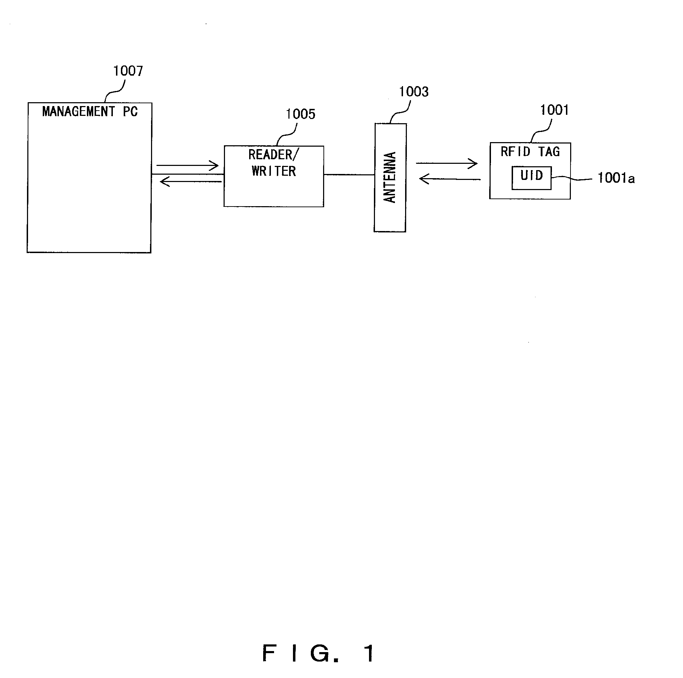

Fig. 1 shows the fundamental configuration of the RFID tag managing system using a radio wave method.

The system shown in this figure is composed of a single RFID tag 1001, an antenna 1003, a reader/writer 1005, and a management PC (personal computer for management) 1007, and is a system where the reader/writer 1005 identifies the existence of the single RFID tag 1001.

For the RFID tag 1001, its unique ID (hereinafter referred to also as UID) 1001a is stored in a memory. This UID 1001a is a unique ID code that a manufacturer assigns when collecting the RFID tag 1001.

A method with which the management PC 1007 identifies the existence of the RFID tag 1001a in this system is described.

The management PC 1007 initially transmits a UID obtainment command to the reader/writer 1005. Upon receipt of the command, the reader/writer 1005 transmits a subcarrier and the UID obtainment command to the RFID tag 1001 by radio waves via the antenna 1003. Here, the subcarrier is a subcarrier wave for supplying power to the RFID tag 1001.

The RFID tag 1001 induces power with the subcarrier received from the antenna 1003, and starts up by using this power. Then, the RFID tag 1001 transmits its UID 1001a toward the antenna 1003. Upon receipt of the UID 1001a of the RFID tag via the antenna 1003, the reader/writer 1005 transmits (returns) the UID 1001a to the management PC 1005.

As described above, the management PC 1007 obtains the UID 1001a of the RFID tag 1001 by transmitting the UID obtainment command to the reader/writer 1005.

The management PC 1007 can grasp in real time whether or not the RFID tag 1001 exists within a radio wave reachable range of the reader/writer 1005 by transmitting the above UID obtainment command at predetermined time intervals. In the meantime, the method with which the management PC 1007 obtains the unique IDs of all of RFID tags within the system while sequentially transmitting the UID obtainment command to reader/writers within the system as described above is generally called a "polling method". In the subsequent description, an operation that the management PC performs to sequentially transmit the UID obtainment command to the reader/writers within the system is referred to as "polling".

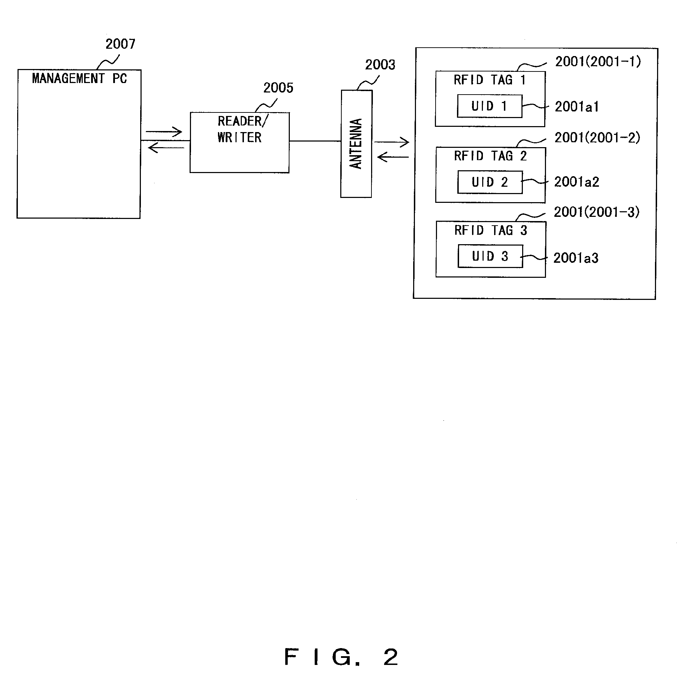

Fig. 2 shows the configuration example of a system in which a reader/writer identifies the existence of a plurality of RFID tags.

Also the system shown in this figure is an RFID tag managing system using a radio wave method, and composed of a plurality of (three in this system) RFID tags 2001 (2001-1, 2001-2, 2001-3), an antenna 2003, a reader/writer 2005, and a management PC 2007.

Each of the plurality of RFID tags 2001-i (i=1 to 3) holds its unique UID 2001aj (j=1 to 3) in a memory.

If the plurality of RFID tags 2001 exist within the system as described above, radio waves interfere with one another when the plurality of RFID tags 2001 simultaneously respond to the UID obtainment command transmitted from the antenna 2003. As a result, the reader/writer 2005 cannot obtain the UIDs 2001a of the RFID tags 2001.

Various types of methods with which the reader/writer 2005 obtains the UIDs 2001a of the RFID tags 2001 in such a system exist. These methods are called anti-collision methods.

Typical anti-collision methods are summarized below.
(1) The RFID tag 2001 generates a random number in response to the UID obtainment command, and returns a UID response only if the random number becomes a predetermined value.
(2) The reader/writer 2005 specifies a group of RFID tags 2001 (the group of RFID tags 2001 the UID 2001a values of which are a predetermined value), which return a response, when transmitting the UID obtainment command to the RFID tags. For example, the reader/writer 2005 specifies that only an RFID tag 2001 having a UID 2001a the lowest-order digit value of which is "1" returns a response. Then, the management PC 2007 obtains the value of the UID 2001a of each RFID tag 2001 by repeatedly transmitting the UID obtainment command while changing this group specification method every time.

In the meantime, as an application example of the RFID tag managing system of the above described method, a method for managing an important document is known.

As a conventional important document managing system using an RFID tag, there is a system where an RFID tag is attached to each document, the radio wave of a UID obtainment command is periodically emitted to the RFID tag of each document, and whether or not the document is taken out is managed based on a response from the RFID tag to the command.

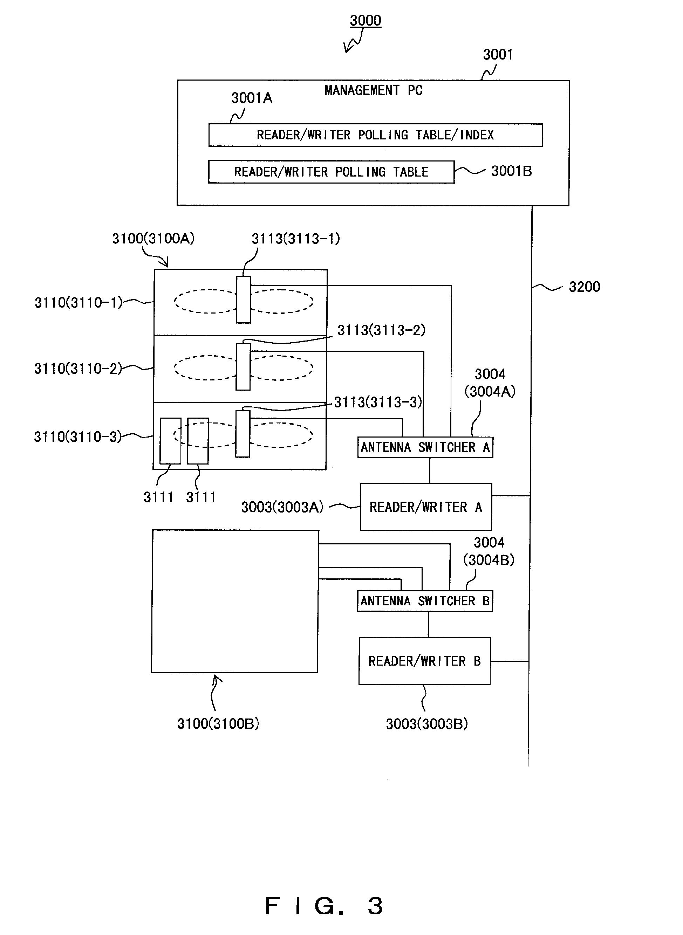

Fig. 3 shows the configuration of the above described conventional important document managing system using an RFID tag.

The important document managing system 3000 shown in this figure is composed of a management PC 3001, a reader/writer 3003A (reader/writer A), a reader/writer 3003B (reader/writer B), an RFID tag reader/writer antenna switcher 3004A (antenna switcher A), an RFID tag reader/writer antenna switcher 3004B (antenna switcher B), two management shelves 3100A and 3100B for storing important documents, and the like, and can automatically detect that a file is taken out.

The management PC 3001 comprises a reader/writer polling table/index 3001A and a reader/writer polling table 3001B in addition to constituent elements comprised by a normal personal computer.

The management PC 3001 is connected to the reader/writers 3003A and 3003B with wireless or wired communication lines 3200.

The reader/writer polling table/index 3001A is an index that points to each row of the reader/writer polling table 3001B.

The reader/writer polling table 3001B is a table for managing a combination of a reader/writer 3004 and an antenna 3100, which corresponds to each file shelf 3110 of the management shelves 3100A and 3100B.

The management shelf 3100A comprises three file shelves 3110. Each of the file shelves 311031110-i (i=1 to 3) comprises one or a plurality of files 3111 and one antenna 3113-j (j=1 to 3).

Also the management shelf 3100B has a configuration similar to the management shelf 3100A.

To the files 3111 stored in the management shelves 3100 (3100A, 3100B), RFID tags (not shown) for storing their UIDs are respectively attached.

The RFID tags of the files 3111 stored in each file shelf 3110 of the management shelf 3100A are read by the antenna switcher 3004A, and the antenna 3113 placed in each file shelf 3110. Additionally, the RFID tags of the files 3111 stored in each file shelf 3110 of the management shelf 3100B are read by the antenna switcher 3004B, and the antenna 3113 placed in each file shelf 3110.

Loop-shaped broken lines depicted at the right and the left of the antenna 3113 within the file shelf 3110 indicate radio waves that the antennas 3113 emit toward the files 3111.

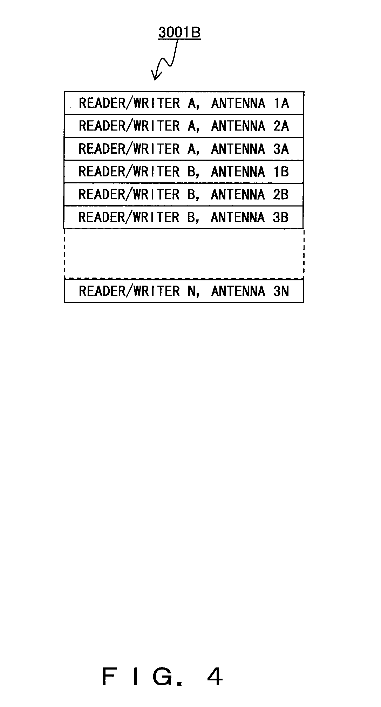

Fig. 4 shows the data structure of the reader/writer polling table 3001A comprised by the above described management PC 3001.

The reader/writer polling table 3001B is composed of a plurality of rows to which serial numbers starting at the top row as a first row are assigned. To each row of the reader/writer polling table 3001B, combination data of the reader/writer 3004 and the antenna 3113 is registered. For example, to the first row of the table 3001A, combination data of the reader/writer A (reader/writer 3003A) and the antenna 1A (antenna 3113-1) is registered. Additionally, to the fourth row, combination data of the reader/writer B (reader/writer 3003B) and the antenna 1B (not shown) is registered. Furthermore, the reader/writer polling table 3001 is configured so that combination data of the reader/writer 3003 and the antenna 3113 can be registered up to N management shelves 3100-1 to 3100-N. Namely, the management PC 3001 can manage files 3111 stored in the N management shelves 3110.

The management PC 3001 makes polling for the reader/writer 3003. Upon receipt of a polling instruction from the management PC 3001, the reader/writer 3003 sequentially switches the antennas 3113 via the antenna switcher 3004, and makes polling by transmitting radio waves for reading UIDs. Then, the reader/writer 3003 notifies the management PC 3001 of the results of the polling, which are received from the antenna 3113.

The management PC 3001 switches the reader/writer 3003 to be instructed to make polling, and the antenna 3113 by referencing the reader/writer polling table 3001B.

Upon receipt of a response to the polling from the reader/writer 3003, the management PC 3001 instructs the next reader/writer 3003 to make polling. The management PC 3001 sequentially executes this process. In the meantime, the reason why a control is performed to prevent the plurality of antennas 3113 from simultaneously emitting radio waves is to avoid radio waves transmitted from the antennas 3113 from interfering with one another.

If a file 3113 is borrowed for a user, the ID and the password of the user are input (or an IC card, etc. is read), and the name of the file 3113 to be borrowed is input on the management PC 3001. In this way, the file 3113 borrowed by the user is recorded and managed in the management PC 3001.

If a file 3113 (a file 3113 not being lent out) that should originally exist in the management shelf 3100 does not exist as a result of the polling, the management PC 3001 makes alarm notification.

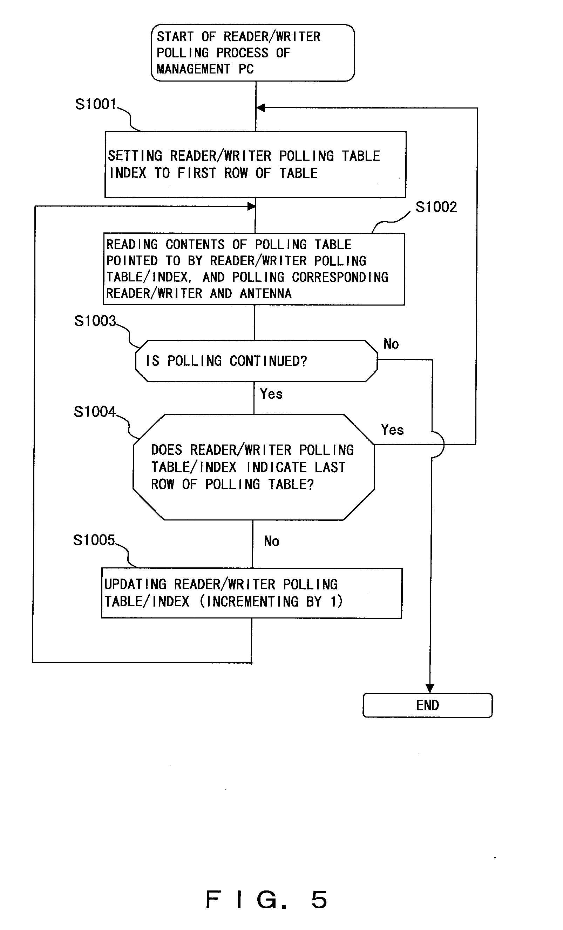

Details of the polling operations performed by the management PC 3001 are described with reference to the flowchart of Fig. 5.

Initially, the management PC 3001 sets the reader/writer polling table/index 3001A to the first row of the reader/writer polling table (step S1001).

Next, the management PC 3000 reads combination data set in the row of the reader/writer polling table 3001B, which is pointed to by the reader/writer polling table/index 3001A, and makes polling for the reader/writer 3003 and the antenna 3113, which are specified by the combination data. At this time, the reader/writer 3003 makes polling for the specified antenna 3113 via the antenna switcher 3004 (step S1001).

Then, the management PC 3001 determines whether or not to continue the polling (step S1003). If the management PC 3001 determines to continue the polling, the process proceeds to step S1004. Or, if the management PC 3001 determines not to continue the polling, the process of this flowchart is terminated.

In step S1004, the management PC 3001 determines whether or not the reader/writer polling table/index 3001A points to the last row of the reader/writer polling table 3001B. If the reader/writer polling table/index 3001A is determined to point to the last row, the process returns to step S1001. Or, if the reader/writer polling table/index 3001A is determined not to point to the last row, the process proceeds to step S1005.

In step S1005, the management PC 3001 updates the value of the reader/writer polling table/index 3001A. Namely, the management PC 3001 increments the value of the reader/writer polling table/index 3001A by 1.

Upon termination of the operation of step S1005, the process returns to step S1002.

As described above, the management PC 3001 reads a UID stored in an RFID tag attached to a file 3111 stored in each file shelf 3110 of the management shelf 3100 with polling by repeating the operations of steps S1002 to S1005. In this case, if a file 3111 does not exist in the file shelf 3110, the reader/writer 3003 cannot read the UID of that file 3111. Therefore, the reader/ writer 3003 returns to the management PC 3001 a response such that the UID of the file 3111 cannot be read.

Upon receipt of the responded result, the management PC 3001 references the inventory data (data indicating whether or not the file 3111 is being lent out) that the management PC 3001 itself manages, and determines whether or not the file 3113, which should originally exist in the management shelf 3100, is missing.

For the above described conventional important document managing system, however, a polling interval for one reader/writer becomes long. As a result, a lot of time is required to read the UIDs of all of files (important documents). If an important document is missing, for example, by being stolen, its detection is delayed, and an alarm is notified after a considerable amount of time elapses from the missing of the important document. This is practically problematic.

As a system for managing an article such as an important document, etc., a book managing system for sequentially reading book information stored on a non-contact storage medium attached to a book while a reader/writer controls an antenna switcher is known (see Japanese Unexamined Patent Application Publication No. 2001-101285).

Additionally, an intra-office intra-company book managing system, in which an RFID tag is attached to a book, a plurality of antennas are placed for a bookstand on which the book is displayed, a sensor for detecting the presence/absence of a user in the neighborhood of the bookstand is provided, and the ID number of the book displayed on the bookstand is read with a reader controlling unit composed of a reader/writer controlling unit and the antenna only if the user stays in the neighborhood of the bookstand, is known (see Japanese Unexamined Patent Application Publication No. 2001-22834).
Patent Document 1: Japanese Published Unexamined Patent Application No. 2001-101285
Patent Document 2: Japanese Published Unexamined Patent Application No. 2001-22834

### Disclosure of Invention

An object of the present invention is to provide an article managing system for enabling an article (such as an important document, etc.), to which a wireless tag is attached, to be quickly detected by shortening the polling interval of a reader/writer.

The present invention assumes an article managing system comprising a wireless tag attached to an article, a reader/writer for reading the unique ID of the wireless tag with a wireless communication via an antenna, and management means for instructing the reader/writer to obtain the unique ID of the wireless tag.

The article managing system according to the present invention is characterized in that the system comprises deciding means for deciding a reader/writer to which a UID obtainment command is transmitted, and controlling means for transmitting the UID obtainment command to the reader/writer decided by the deciding means.

With the article managing system according to the present invention, a reader/writer to which a UID obtainment command is transmitted is selected, whereby the polling interval of a reader/writer can be shortened.

The article managing system according to the present invention may have a configuration (first aspect) where the deciding means comprises, for example, a combination table for storing combination data of reader/writers to which the UID obtainment command can be simultaneously transmitted, and first selecting means for deciding one or a plurality of reader/writers set in the combination data as reader/writers, to which the UID obtainment command is transmitted, by referencing the combination data within the combination table.

With the article managing system according to the first aspect, the UID obtainment command can be concurrently transmitted to a plurality of reader/writers, whereby the polling interval of each reader/writer can be shortened.

Additionally, the article managing system according to the present invention may have a configuration (second aspect) where, for example, the article is stored in a shelf having a door, and the deciding means comprises detecting means for detecting the opening/closing of the door of the shelf, and second selecting means for deciding a reader/writer obtaining the unique ID of a wireless tag of an article stored in the shelf, the door of which is open, as a reader/writer, to which the UID obtainment command is transmitted, based on the result of the detection of the detecting means.

The above described second aspect may have a configuration where the second selecting means comprises, for example, a sensor for detecting the opening/closing of the door provided in the shelf, and monitoring means for monitoring the opening/closing state of the door of the shelf based on the result of the detection of the sensor. The monitoring means may also have a configuration to comprise, for example, a sensor for detecting the opening/closing of the door provided in the shelf, and detecting means for detecting that the door of the shelf is open based on the result of the detection of the sensor. In this case, the sensor is placed, for example, in the shelf. At this time, the monitoring means may be provided within the managing means, and the sensor and the monitoring means may be connected with a communication line.

With the article managing system according to the second aspect, the UID obtainment command is transmitted to a reader/writer only in case of necessity, whereby the UID obtainment command can be prevented from being unnecessarily transmitted to a reader/writer. Additionally, the unique ID of an article stored in a shelf the door of which is open can be obtained in real time.

The article managing system according to the present invention may have a configuration (third aspect) where, for example, the article is stored in a shelf having a door, and the deciding means comprises detecting means for detecting the opening/closing angle of the door of the shelf, and third selecting means for deciding a reader/writer obtaining the unique ID of a wireless tag of an article stored in a shelf having a door, which is open at a specified angle or more, as a reader/writer, to which the UID obtainment command is transmitted, based on the result of the detection of the detecting means.

The above described third aspect may have a configuration where, for example, the third selecting means comprises an angle setting table for storing the instructed angle, and determining means for determining that the door is open at the specified angle or more by making a comparison between the specified angle stored in the angle setting table and the opening/closing angle of the door, which is input from the detecting means.

Additionally, the above described third aspect may have a configuration where, for example, the detecting means is placed between the shelf and the door. In such a configuration, for example, the detecting means may be provided within the managing means, and the detecting means and the instructing means may be connected with a communication line.

With the article managing system according to the third aspect, the UID obtainment command is transmitted only to a reader/writer obtaining the unique ID of an article stored in a shelf the door of which is open at a specified angle or more, whereby the UID obtainment command can be prevented from being unnecessarily transmitted to a reader/writer. Furthermore, an article taken out of the shelf can be grasped in real time, whereby the safety and the reliability of article management can be improved.

### Brief Description of Drawings

Fig. 1 explains a method with which a reader/writer reads the unique ID of a single RFID tag.
Fig. 2 explains a method with which a reader/writer reads the unique IDs of a plurality of RFID tags.
Fig. 3 shows the entire configuration of a conventional important document managing system.
Fig. 4 shows the configuration of a reader/writer polling table of Fig. 3.
Fig. 5 is a flowchart explaining the polling process of a management PC in the conventional important document managing system of Fig. 3.
Fig. 6 shows the entire configuration of an important document managing system of an embodiment 1 according to the present invention.
Fig. 7 shows the configuration of a polling combination table of Fig. 6.
Fig. 8 shows a configuration example of an antenna (reader/writer antenna) of Fig. 6.
Fig. 9 (a) shows an example where an RFID tag is attached to a file and Fig. 9 (b) shows a configuration example of an RFID tag.
Fig. 10 is a flowchart explaining the polling process of a management PC in the important document managing system of the embodiment 1.
Fig. 11 shows the entire configuration of an important document managing system (No. 1) of an embodiment 2 according to the present invention.
Fig. 12 is a flowchart explaining the polling process of a management PC in the important document managing system (No. 1) of the embodiment 2.
Fig. 13 shows the entire configuration of an important document managing system (No. 2) of the embodiment 2 according to the present invention.
Fig. 14 is a flowchart explaining the polling process of a management PC in the important document managing system (No. 2) of the embodiment 2.
Fig. 15 shows the entire configuration of an important document managing system of an embodiment 3 according to the present invention.
Fig. 16 explains the polling process of a management PC in the important document managing system of the embodiment 3.

### Best Mode of Carrying Out the Invention

Preferred embodiments according to the present invention are described below with reference to the drawings.

In an important document managing system according to a preferred embodiment of the present invention, which is described below, a reader/writer controls a communication with an RFID tag attached to a file (important document) via an antenna (reader/writer antenna) placed in a file shelf, or an antenna switcher and an antenna, and performs a protocol conversion between a management PC, which is a higher-order device, and an RFID tag. The antenna communicates with the RFID tag with a radio wave method, an electromagnetic induction method, etc. Types of the antenna include a dipole antenna, a planar antenna, a micro-strip antenna (for a radio wave method), a loop coil antenna (for an electromagnetic induction method), and the like. The RFID tag is a passive type or an active type, and comprises an antenna, and an LSI chip including a demodulator, a modulator, a controlling unit, an amplifier, a memory, etc.

Additionally, in the description of this preferred embodiment, an operation that the management PC performs to transmit a UID obtainment command to the reader/writer is referred to as "polling".

### [embodiment 1]

The embodiment 1 is intended to shorten the polling period of each reader/writer within a system by preregistering to a table a combination of reader/writers, which do not cause a problem such as radio wave interference, etc. even if the reader/writers are simultaneously polled, and by concurrently polling the plurality of reader/writers, which can be simultaneously polled, with reference to the table.

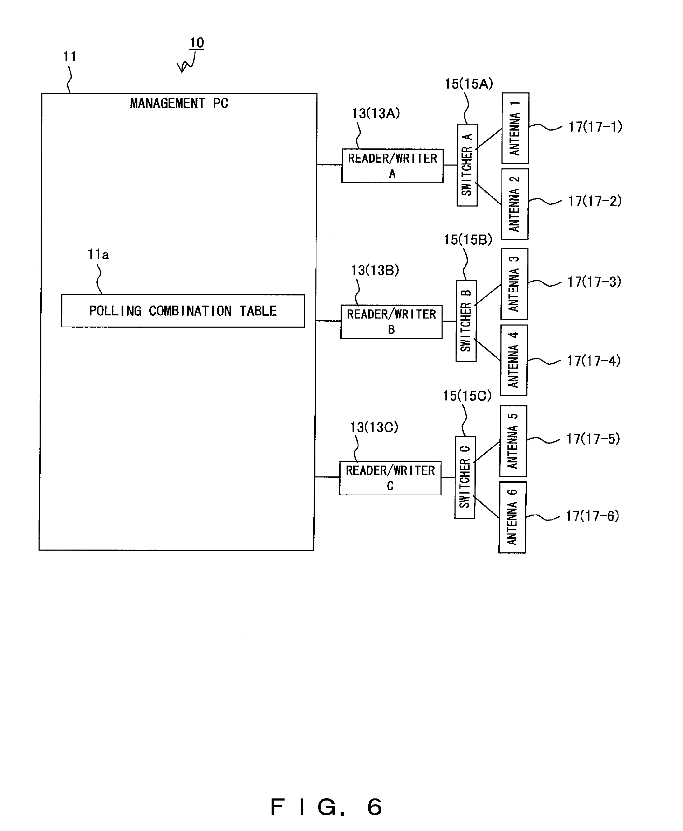

Fig. 6 shows the entire configuration of an important document managing system, which is the embodiment 1 of the present invention.

The important document managing system 10 shown in this figure is composed of a management PC 11, three reader/writers 13 (13A, 13B, 13C), three antenna switchers 15 (15A, 15B, 15C), six antennas (reader/writer antennas) 17 (17-1 to 17-6), and the like.

The antennas 17 are placed in file shelves (not shown) of a management shelf (not shown) similar to the antennas of Fig. 3 although the management shelf is omitted in Fig. 6. In this system, the management shelf is composed of file shelves of three stages. The antennas 17-1 and 17-2, the antennas 17-3 and 17-4, and the antennas 17-5 and 17-6 are placed almost at the centers of the file shelves in the first, the second, and the third stages respectively.

The antenna switcher 15A controls switching between the antennas 17-1 and 17-2. The antenna switcher 15B controls switching between the antennas 17-3 and 17-4. Additionally, the antenna switcher 15C controls switching between the antennas 17-5 and 17-6.

The reader/writer 13A controls the antenna switcher 15A to read the UIDs of RFID tags attached to files stored in the file shelf in the first stage. The reader/writer 13B controls the antenna switcher 15B to read the UIDs of RFID tags attached to files stored in the file shelf in the second stage. Additionally, the reader/writer 13C controls the antenna switcher 15C to read the UIDs of RFID tags attached to files stored in the file shelf in the third stage.

The management PC 11 controls polling for the three reader/writers 13, and reads the UIDs of the RFID tags attached to the files stored in the file shelves of the management shelf via the reader/writers 13 respectively.

Depending on a reader/writer, for example, if reader/writers are positioned quite away from one another, no problems occur even if they are simultaneously polled (radio wave interference does not occur).

In this embodiment, a polling combination table 11a is provided within the management PC 11 by using such a characteristic of a reader/writer, and the management PC 11 manages a combination of reader/writers 13, which may be simultaneously polled, with the polling combination table 11a. In this embodiment, this polling combination table 13a is stored in a storage device within the management PC 11. The polling combination table 13a may be stored in an external storage device connected to the management PC 11.

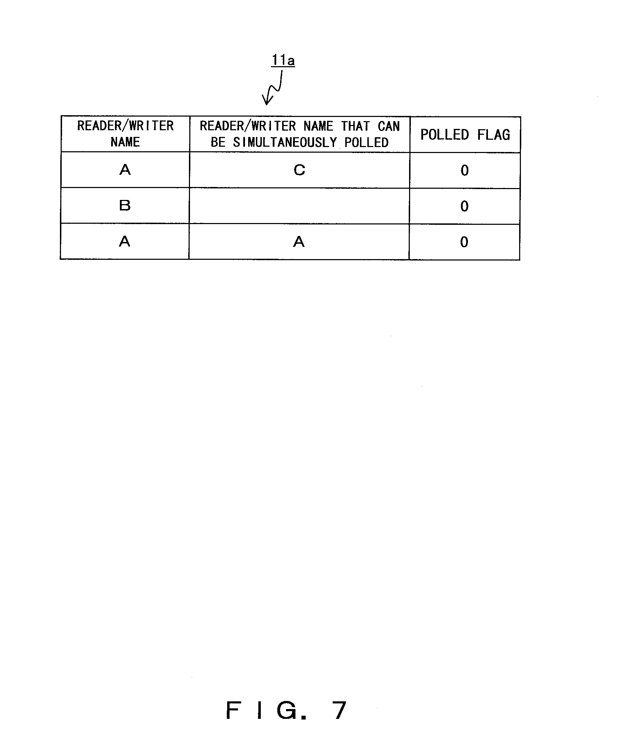

Fig. 7 shows the internal configuration of the above described polling combination table 13a.

The polling combination table 13a stores a record composed of three items such as a "reader/writer name", a "reader/writer name that can be simultaneously polled", and a "polled flag" in each row.

The "reader/writer name" is an item in which the name of a reader/writer 13 within this system is set. The names of the reader/writers 13A, 13B, and 13C are A, B, and C respectively. The "reader/writer name that can be simultaneously polled" is an item in which the name of a reader/writer 13 that can be polled simultaneously with a reader/writer 13 set in the "reader/writer name" item. Additionally, the "polled flag" is a flag which is set to 1 upon termination of the polling of the reader/writer 13 set in the "reader/writer name" item. The clear value of this flag is 0.

In the first row of the polling combination table 13a shown in Fig. 7, the record of the reader/writer 13A the "reader/writer name" of which is "A" is stored, and "C" is registered in the "reader/writer name that can be simultaneously polled" item. Additionally, in the third row, the record of the reader/writer 13C the "reader/writer name" of which is "C" is stored, and "A" (the name of the reader/writer 13A) is registered in the "reader/writer name that can be simultaneously polled" item. Furthermore, in all of the records in the first to the third rows of the polling combination table 13a, the "polled flag" is set to "0".

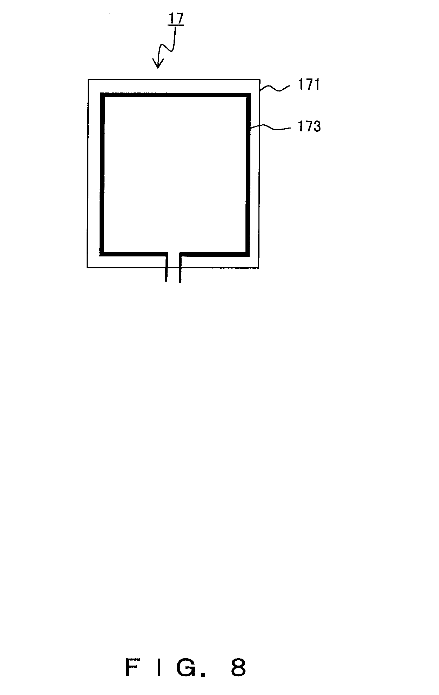

Fig. 8 shows a configuration example of the antenna (reader/writer antenna) 17 of Fig. 7.

The antenna 17 shown in this figure is composed of an antenna unit 173, and a book- or a bookend-shaped antenna case 171 for accommodating the antenna unit 173. The antenna unit 173 is a loop coil antenna, and communicates with an RFID tag with an electromagnetic induction method under the control of the reader/writer 13. In this example, the antenna unit 173 is a loop coil antenna. However, the antenna unit 173 may be an antenna such as a dipole antenna, etc., which is used with a radio wave method.

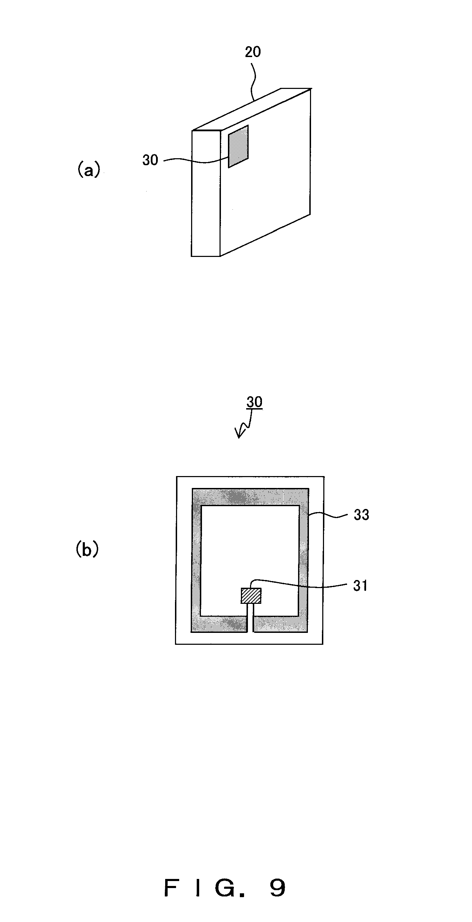

Fig. 9 shows a configuration example of the RFID tag 30.

Fig. 9 (a) is a perspective view showing a position in which the RFID tag 30 is attached to a file 20. In the example shown in Fig. 9(a), the RFID tag 30 is attached to the upper left of the face of the file 20.

In the present invention, the position in which the RFID tag 30 is attached to the file 20 is not limited to that shown in Fig. 9(a). The position may be anywhere as far as it is a position in which the RFID tag 30 can communicate with the antenna 17.

Fig. 9(b) shows a configuration example of the RFID tag 30.

In the example shown in Fig. 9(b), the RFID tag 30 is composed of an RFID chip 31 and an RFID tag antenna 33. The RFID chip 31 is an LSI chip on which a controlling unit (not shown), a transmitter (not shown), a receiver (not shown), a memory, etc. are integrated. The memory is, for example, a non-volatile memory, and stores a unique ID.

The RFID tag antenna 33 is a loop coil antenna, and communicates with the reader/writer antenna 17 shown in Fig. 8 with an electromagnetic induction method. In this example, the RFID tag antenna 33 is a loop coil antenna. However, the type of the RFID tag antenna 33 is decided depending on a method of a communication between the RFID tag 30 and the reader/writer 13. If the communication method is a radio wave method, the RFID tag antenna 33 is implemented with an antenna such as a dipole antenna, a planar antenna, etc., which is suitable for the radio wave method. In this case, also the antenna unit 173 of the reader/writer 13 is an antenna in a form similar to the RFID tag antenna 33.

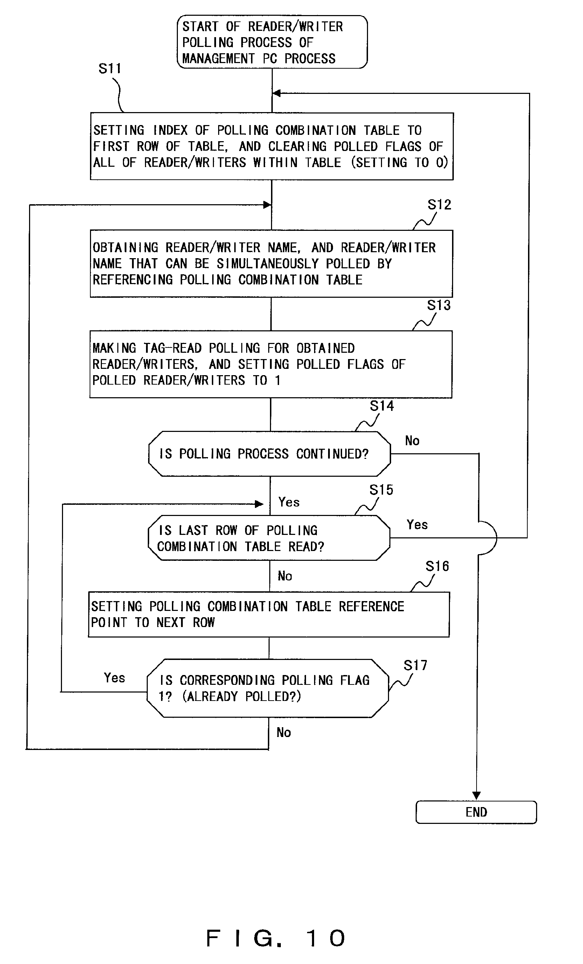

Fig. 10 is a flowchart explaining the polling process of the management PC 11 in this embodiment. A CPU (Central Processing Unit) within the management PC executes a program stored in the memory, etc. of the management PC 11, whereby the polling process is executed.

The management PC 11 initially sets the index (not shown) of the polling combination table 13a to its first row. Then, the management PC 11 clears the "polled setting flags" in all of rows of the polling combination table 13a (sets the flag to "0") (step S11).

Next, the management PC 11 references the record of the row of the polling combination table 13a, which is pointed to by the index, to obtain a reader/writer name set in the "reader/writer name" item, and a reader/writer name set in the "reader/writer name that can be simultaneously polled" item (step S12).

Then, the management PC 11 polls the reader/writers 13 having the reader/writer names obtained in step S12, and sets the "polled flags" of the polled reader/ writers 13 within the polling combination table 13a to "1" (step S13).

Then, the management PC 11 determines whether or not to continue the polling process (step S14) . If the polling process is determined to be continued, the process proceeds to step S15. Or, if the polling process is determined to be aborted, the process of this flowchart is terminated.

In step S15, the management PC 11 determines whether or not the record in the last row of the polling combination table 13a has been read. If records of all of the rows in the polling combination table 13a have not been read yet, the process proceeds to step S16. Or, if all of the records have been read, the process returns to step S11.

In step S16, the management PC 11 sets the index of the polling combination table 13a to the next row. Then, the management PC 11 determines whether or not the "polled flag" is set to "1" (already polled) by referencing the "polled flag" in the row of the polling combination table 13a, which is pointed to by the index (step S17).

If the "polled flag" is set to "1" ("YES" in step S17), the process returns to step S15. Or, if the "polled flag" is set to "0", the process returns to step S12.

All of reader/writers 13 within the system 10 are polled by repeating the operations of steps S12 to S17 as described above. Upon termination of the polling for all of the reader/writers 13, the next polling is restarted.

As stated earlier, in this embodiment, the "polled flag" of each reader/writer 13 is referenced in step S17, and the process immediately proceeds to the polling process of the next reader/writer 13 if the corresponding reader/writer 13 has been already polled.

For the polling combination table 13a shown in Fig. 7, the reader/writer 13C the reader/writer name of which is "C" is simultaneously polled when the reader/writer 13A the reader/writer name of which is "A" is polled, and the "polled flags" of these reader/writers 13 are set to "1" (step S13).

In consequence, when the management PC 11 reads the record of the reader/writer 13C in the third row of the polling combination table 13a, its "polled flag" is set to "1". Accordingly, the management PC 11 does not poll the reader/writer 13C, and the process immediately returns to step S12, in which a transfer is made to the next polling process.

Therefore, the number of times that the polling is made in one period of polling made by the management PC 11 (the process for sequentially polling all of reader/writers 13 within the system 10 once) is twice. Accordingly, the polling interval of each reader/writer 13 is shortened.

### [embodiment 2]

The embodiment 2 is intended to detect the opening/closing of a door (file shelf) of a file shelf by placing a key to the door having an electronic lock function in the file shelf having the door, and by detecting the opening/closing (electronic lock state) of the key. Then, polling is made for a reader/writer only when the file door is opened, thereby preventing unnecessary polling for a reader/writer.

### [in a case where the number of file shelves of the management shelf is one]

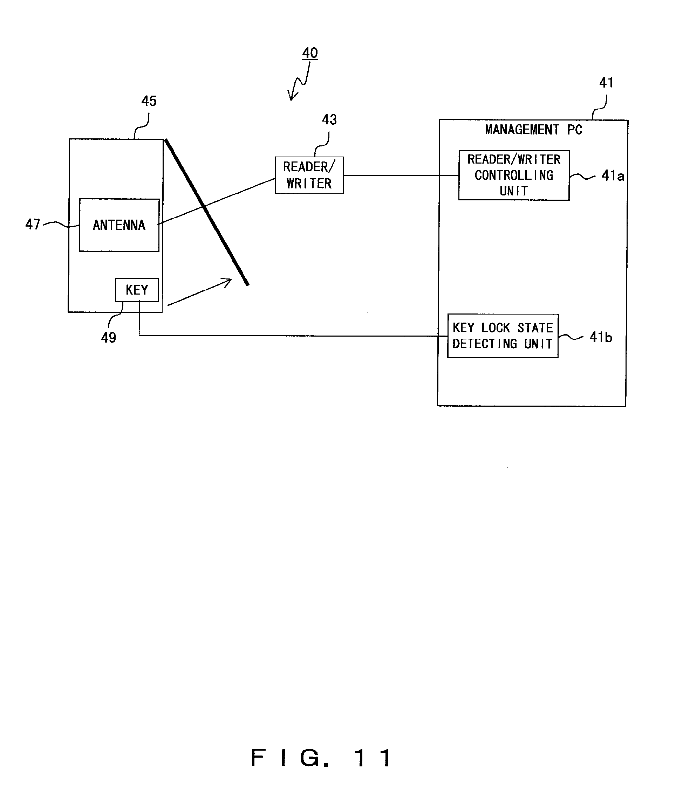

Fig. 11 shows the entire configuration of an important document managing system where the number of file shelves of the management shelf is one.

The important document managing system 40 shown in this figure is composed of a management PC 41, a reader/writer 43, and a management shelf (hereinafter referred to as a file shelf) 45.

The management PC 41 comprises a reader/writer controlling unit 41a and a key lock state detecting unit (key lock state monitoring unit) 41b in addition to a CPU (not shown) and a memory (not shown).

The reader/writer controlling unit 41a controls the polling of the reader/writer 43 in accordance with an instruction from the CPU.

The key lock state detecting unit 43b is connected to a key 49 placed in the file shelf 45 with a wired or wireless communication line. The key lock state detecting unit 43b reads a detection state signal (the detection signal of the opening/closing state of the file shelf 45) from the key 49. Then, the key lock state detecting unit 43b outputs a signal (door opening/closing signal), which indicates whether or not the door 46 of the file shelf 45 is open, to the CPU based on the detection state signal. The CPU determines based on the door opening/closing signal whether or not the door 46 of the file shelf 45 is open. If the door 46 is open, the reader/writer controlling unit 41a is polled.

The reader/writer 43 transmits a UID obtainment command to an antenna 47 placed in the file shelf 45 in accordance with a polling instruction from the reader/writer controlling unit 41a.

The file shelf 45 comprises the door 46, the antenna 47, the key 49, a file (not shown), and the like.

The door 46 is a door for opening/closing the file shelf 46, and provided to contact the key 49 if it is closed. An arrow depicted between the key 49 and the door 46 indicates a direction where the door 46 is opened.

The antenna 47 is, for example, a dipole antenna. The antenna 47 transmits a subcarrier and the UID obtainment command toward an RFID tag (not shown) attached to a file within the file shelf under the control of the reader/writer controlling unit 41a. Additionally, the antenna 47 returns the UID obtained from the RFID tag to the reader/writer controlling unit 41a.

The key 49 comprises a function to electronically lock the door 46 of the file shelf 45, and detects the opening/closing of the door 46. Additionally, the key 49 notifies the key lock state detecting unit 41b of the opening/closing state of the door 46. This notification is made, for example, in accordance with an interrupt from the key 49 to the key lock state detecting unit 41b, or a read request from the key lock state detecting unit 41b to the key 49.

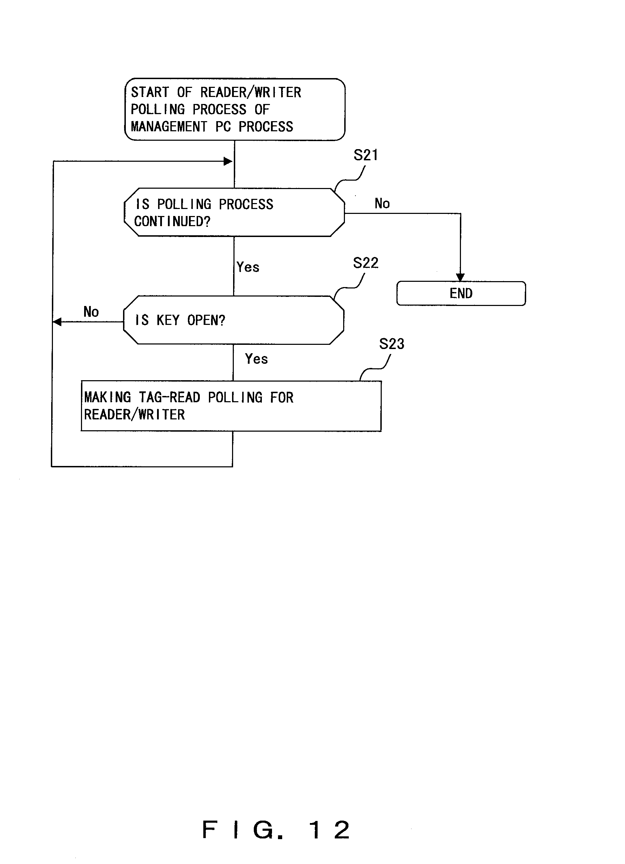

Fig. 12 is a flowchart explaining the polling process of the management PC 41 in this embodiment. The CPU within the management PC executes a program stored in the memory, etc. of the management PC 41, etc., whereby this process is executed.

Initially, the management PC 41 determines whether or not to continue the polling process (step S21). If the polling process is determined to be continued, the process proceeds to step S22. Or, if the polling process is determined not to be continued, the process of this flowchart is terminated.

In step S22, the management PC 41 determines based on the result of the detection made by the key lock state detecting unit 41b whether or not the key 49 to the file shelf 45 is open. If the key 49 is open, the process proceeds to step S23. If the key 49 is not open, the process returns to step S21.

In step S23, the management PC 41 polls the reader/writer 43 with the reader/writer controlling unit 41a in order to read the UID of an RFID tag attached to a file stored in the file shelf 45 (step S23). Then, the process returns to step S21.

As described above, the management PC 45 polls the reader/writer 43 only if the door 46 of the file shelf 45 is open. Accordingly, the reader/writer 43 is polled only when the door 46 of the file shelf 45 is open. Therefore, the reader/writer 43 is prevented from being wastefully polled.

### [in a case where the number of file shelves of the management shelf is two]

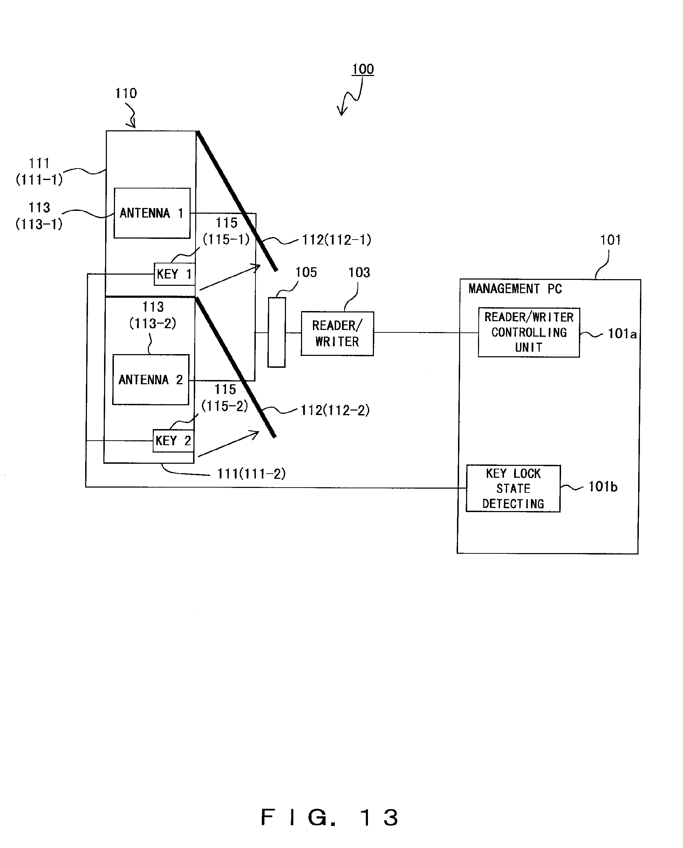

Fig. 13 shows the entire configuration of an important document managing system where the number of file shelves of the management shelf is two.

The important document managing system 100 shown in this figure comprises a management PC 101, a reader/writer 103, an antenna switcher 105, and a management shelf 110.

The management PC 101 has a configuration almost similar to the management PC 41 of the important document managing system 40, and comprises a reader/writer controlling unit 101a and a key lock state detecting unit 101b.

The reader/writer controlling unit 101a has a function similar to the reader/writer controlling unit 41a of the management PC 41, and polls the reader/writer 103.

The key lock state detecting unit 43b is connected to a first key 115 (115-1) and a second key 115 (115-2), which are respectively placed in a first file shelf 111 (111-1) and a second file shelf (111-2) of the management shelf 110, with wired or wireless communication lines. Additionally, the key lock state detecting unit 43b reads a first detection state signal (a first detection signal indicating the opening/closing state of the door 112 (112-1) of the file shelf 111-1), and a second detection state signal (a second detection signal indicating the opening/closing state of the door 112 (112-2) of the first file shelf 111-2) respectively from the first and the second keys 115 (115-1, 115-2). Then, the key lock state detecting unit 43b outputs a first door opening/closing signal, which indicates whether or not the door 112-1 of the first file shelf 111-1 is open, and a second door opening/closing signal, which indicates whether or not the door 112-2 of the second file shelf 111-2 is open, to the CPU based on the detection state signals. The CPU determines based on the door opening/closing signals whether or not the doors 112-1 and 112-2 of the first and the second file shelves 111-1 and 111-2 are open. If the first door 111-1 or the second door 112-2 is open, the CPU polls the reader/writer controlling unit 41a to read the UID of an RFID tag (not shown) attached to a file stored in the file shelf 111 the door 112 of which is open.

The reader/writer 103 transmits the UID obtainment command to an antenna 113 placed in the file shelf 112, the door 112 of which is open, via the antenna switcher 105 upon receipt of a polling instruction from the reader/writer controlling unit 41a.

The antenna switcher 105 transmits a subcarrier and the UID obtainment command to an instructed antenna 113 upon receipt of an instruction from the reader/writer 103.

The management shelf 110 comprises two file shelves 111 (a first file shelf 111-1 and a second file shelf 111-2).

The first and the second file shelves 111 (111-1, 111-2) have a similar configuration, and comprise an antenna 113 (113-1, 113-2), a door (112-1,112-2), and a key 115 (115-1, 115-2).

Within the first and the second file shelves 111-1 and 112-2, files (important documents) are stored, and RFID tags are attached to the files. Additionally, the antennas 113 (113-1, 113-2) are placed, for example, almost at the centers of the file shelves 111 (111-1, 111-2).

The first and the second doors 112 (112-1, 112-2) are doors for opening/closing the first and the second file shelves 111 (111-1, 111-2) respectively, and provided to contact the first and the second keys 115 (115-1, 115-2) when they are closed. Arrows depicted between the first key 115-1 and the first door 112-1, and between the second key 115-1 and the second door 112-1 in Fig. 13 respectively indicate directions where the first and the second doors 112-1 and 112-2 are opened.

The first and the second antennas 113-1 and 113-2 are, for example, dipole antennas. The first and the second antennas 113-1 and 113-2 transmit a subcarrier and the UID obtainment command to RFID tags (not shown) attached to files within the first and the second file shelves 111-1 and 111-2 under the control of the reader/writer controlling unit 41a via the reader/writer 103 and the antenna switcher 105. Then, the antennas 113-1 and 113-2 return the UIDs obtained from the RFID tags to the reader/writer controlling unit 101a via the antenna switcher 105 and the reader/writer 103.

The first and the second keys 115-1 and 115-2 respectively have a function to electronically lock the doors 112- and 112-2 of the first and the second file shelves 111-1 and 111-2. The first key 115-1 detects the opening/closing of the door 112-1 provided in the first file self 111-1, whereas the second key 115-2 detects the opening/closing of the door 112-1 provided in the second file shelf 111. The first and the second keys 115-1 and 115-2 notify the key lock state detecting unit 101b of the opening/closing states of the first and the second doors 112-1 and 112-2 respectively. This notification is made, for example, in accordance with an interrupt from the key 112 to the key lock state detecting unit 101b, or a read request from the key lock state detecting unit 41b to the key 112.

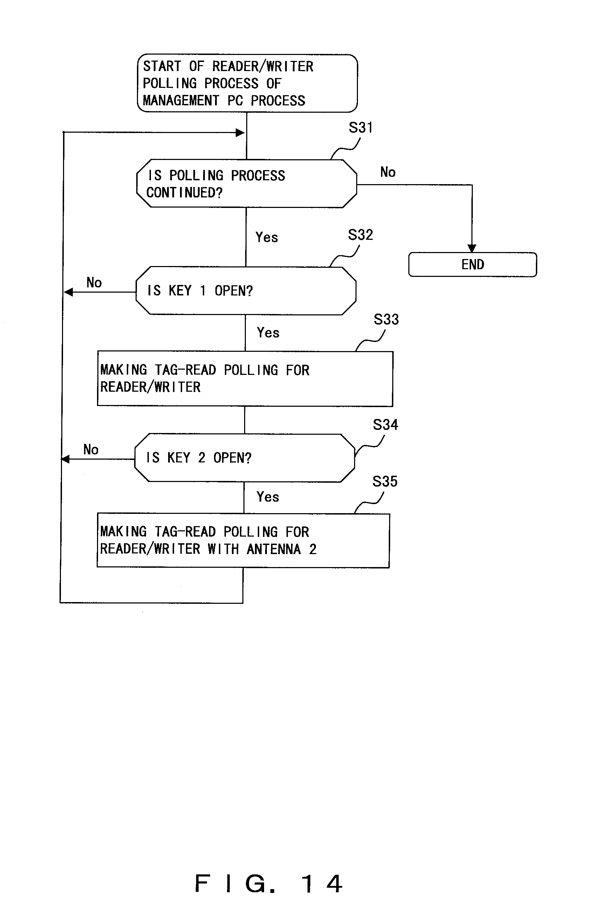

Fig. 14 is a flowchart explaining the polling process of the management PC 101 in this embodiment. A CPU of the management PC 101 executes a program stored in the memory, whereby the process of this flowchart is executed.

Initially, the management PC 101 determines whether or not to continue the polling process (step S31). If the polling process is determined to be continued, the process proceeds to step S32. If the polling process is determined to be aborted, the process of this flowchart is terminated.

In step S32, the management PC 101 determines whether or not the first key 115-1 (key 1) is open. This determination is made based on the result of the detection made by the key lock state detecting unit 41b. If the management PC 101 determines that the first key 115-1 is open, namely, the door 112-1 of the first file shelf 111-1 is open ("YES" in step S32), the process proceeds to step S33. Or, if the management PC 101 determines that the first key 115-2 is closed, namely, the door 112-1 of the first file shelf 111-1 is closed, the process returns to step S31.

In step S33, the management PC 101 makes polling, which is intended to read the RFID tags attached to the files stored in the first file shelf 111-1 with the first antenna 113-1, for the reader/writer 103.

Then, the management PC 101 determines whether or not the second key 115-2 (key 2) is open (step S34). This determination is made based on the result of the detection made by the key lock state detecting unit 41b. If the management PC 101 determines that the second key 115-2 is open, namely, the door 112-2 of the second file shelf 111-2 is open ("YES" in step S34), the process proceeds to step S35. Or, if the management PC 101 determines that the second key 115-2 is closed, namely, the door 112-2 of the second file shelf 111-2 is closed, the process returns to step S31.

In step S35, the management PC 101 makes polling, which is intended to read the RFID tags attached to the files stored in the first file shelf 111-2 with the second antenna 113-2, for the reader/writer 103. Upon termination of the operation of step S35, the process returns to step S31.

As described above, the management PC 101 polls the reader/writer 103 via the reader/writer controlling unit 41a only when the door 112-1 of the first file shelf 111-1, or the door 112-2 of the second file shelf 111-2 is open. As a result, the reader/writer 103 is prevented from being wastefully polled.

The above described embodiments are the examples of the important document managing systems where the management shelf comprises one or two file shelves. However, the present invention is not limited to these embodiments, and also applicable to an important document managing system where a management shelf comprises three or more file shelves.

### [embodiment 3]

The embodiment 3 is intended to provide a sensor for detecting an angle at which a door is open in the opening/closing portion of the door (file door) of a file shelf, and to make polling for a reader/writer only when the file door is opened at a prespecified angle or more based on the detection angle of the sensor. The angle is set, for example, to an angle at which a user can take a file out of the file shelf.

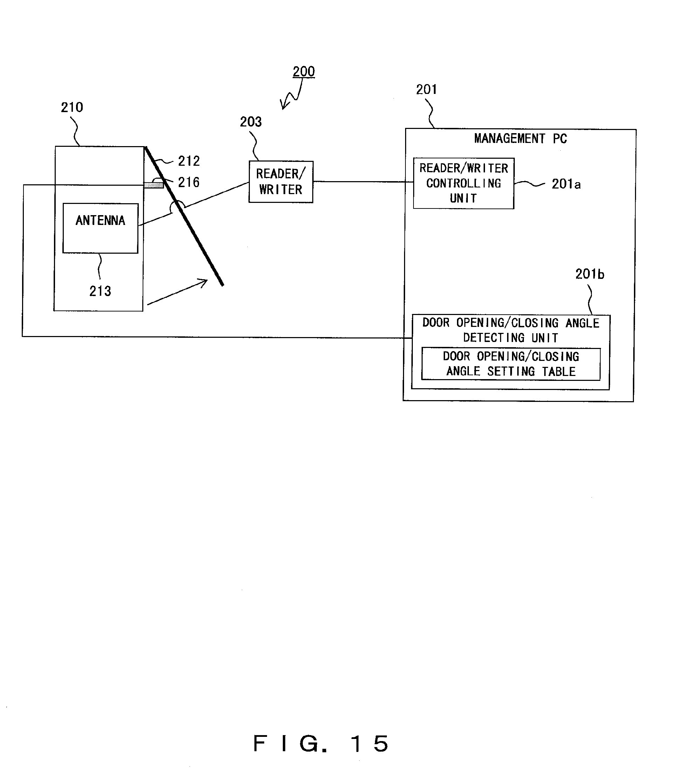

Fig. 15 shows the entire configuration of the important document managing system of the embodiment 3.

The important document managing system 200 shown in this figure comprises a management PC 201, a reader/writer 203, and a management shelf 210. Since the management shelf 210 is composed of one file shelf in this embodiment, the management shelf 210 is referred to as a file shelf 210 in the subsequent description.

The management PC 201 comprises a reader/writer controlling unit 201a and a door opening/closing angle detecting unit 201b in addition to a CPU and a memory.

The reader/writer controlling unit 201a controls the polling of the reader/writer 203 in accordance with an instruction from the CPU.

The reader/writer controlling unit 201a has a function similar to the reader/writer controlling unit 41a of the management PC 41, and polls the reader/writer 103.

The door opening/closing angle detecting unit 201b is connected to an opening/closing angle detecting sensor 216, which is placed in an upper portion of the file shelf 210, with a wired or a wireless communication line, and receives a signal (opening/closing angle signal), which indicates the opening/closing angle of the door 212 of the file shelf 210, from the opening/closing angle detecting sensor 216. The key lock state detecting unit 41b comprises a door opening/closing angle setting table 230. The opening/closing angle setting table 230 stores a prespecified angle.

The door opening/closing angle detecting unit 201b detects whether or not the opening/closing angle of the door 212 is equal to or larger than a specified angle by making a comparison between the opening/closing angle of the door 212, which is received from the opening/closing angle detecting sensor 216, and the angle set in the opening/closing angle setting table 230. The CPU inputs the result of the detection from the opening/closing angle detecting sensor 216, and controls the polling for the reader/writer 203 based on the result of the detection.

Upon receipt of a UID obtainment command from the reader/writer controlling unit 201a of the management PC 201, the reader/writer 203 reads the UID of an RFID tag (not shown) attached to a file (not shown) stored in the file shelf 210.

The file shelf 210 comprises the door 212, an antenna 213, and the opening/closing angle detecting sensor 216.

The door 212 is a door which is open in the direction of an arrow in Fig. 15, and is closed normally.

The antenna 213 is placed almost at the center of the file shelf 210, reads the UID of the RFID tag attached to the file stored in the file shelf 210 upon receipt of a subcarrier and the UID obtainment command, and returns the UID to the reader/writer 203.

The opening/closing angle detecting sensor 216 is placed in an upper portion of the file shelf 210, and detects the opening/closing angle of the door 212. Then, the opening/closing angle detecting sensor 216 outputs the detected opening/closing angle to the door opening/closing angle detecting unit 201b of the management PC 201.

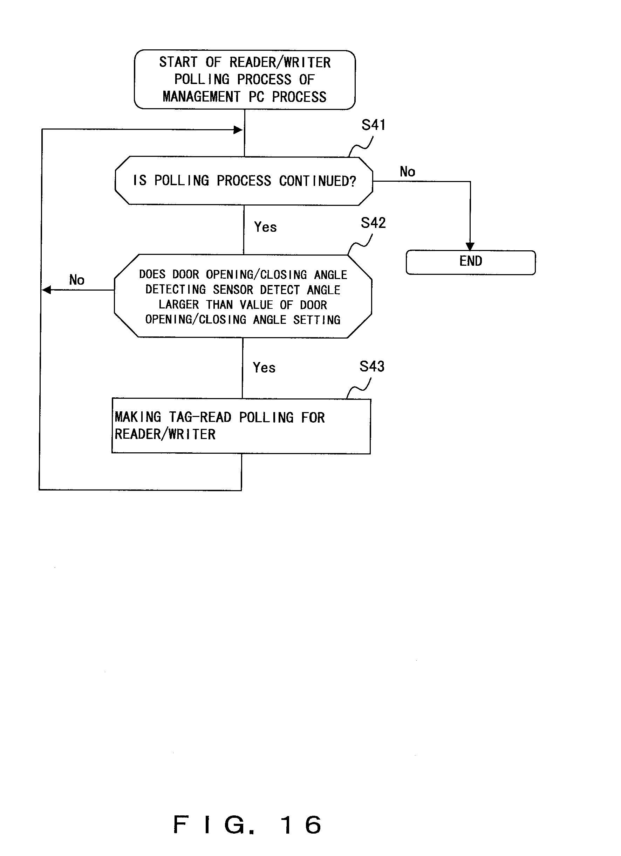

Fig. 16 is a flowchart explaining the polling process of the management PC 201 of this embodiment.

Initially, the management PC 201 determines whether or not to continue the polling process (step S41) . If the polling process is determined to be continued, the process proceeds to step S42. If the polling process is determined to be aborted, the process of this flowchart is terminated.

In step S42, the management PC 201 determines, based on the result of the detection made by the door opening/closing angle detecting unit 201b, whether or not the opening/closing angle detecting sensor 216 detects an angle equal to or larger than an angle set in the door opening/closing angle setting table 230.

If the opening/closing angle detecting sensor 216 detects that the angle is equal to or larger than the specified angle set in the door opening/closing angle setting table 230 ("YES" in step S42), the process proceeds to step S43. Or, if the opening/closing angle detecting sensor 216 does not detect the angle equal to or larger than the specified angle, the process returns to step S41.

In step S43, the management PC 201 outputs the UID obtainment command to the reader/writer 203 via the reader/writer controlling unit 41a to make polling. Upon termination of the operation of step S43, the process returns to step S41.

As described above, the management PC 201 transmits the UID obtainment command to the reader/writer 203 only when the door 212 of the file shelf 210 is open at a specified angle or more. Accordingly, polling for the reader/writer 203 is made only in case of necessity.

The embodiment 3 targets the important document managing system comprising a management shelf having one file shelf. However, the present invention is not limited to this embodiment, and also applicable to an important document managing system comprising a management shelf having a plurality of file shelves. Namely, if the management shelf has a plurality of file shelves, a sensor for detecting the opening/closing angle of the door of each file shelf may be placed in each file shelf.

The present invention is not limited to the above described embodiments 1 to 3, and various types of modifications can be made within a scope which does not deviate from the technical concept of the present invention. For example, in the above described embodiments, a file (document) is used as a management target. However, the management target is not limited to the file, and the embodiments are also applicable to a system for managing another article such as a book, a commodity, etc., to which a wireless tag such as an RFID tag, etc. can be attached. Additionally, in the above described embodiments, all of the management computers are personal computers. However, a computer having a more enhanced function, such as a server, a general-purpose computer, etc. may be available as a management computer.

According to the present invention, a UID obtainment command is concurrently transmitted to a plurality of reader/writers, which do not cause a problem such as radio wave interference, etc., whereby the polling interval of a reader/writer can be shortened. Additionally, the UID obtainment command is transmitted only to a reader/writer that reads the unique ID of an article stored in a shelf the door of which is open, whereby the UID obtainment command can be prevented from being unnecessarily transmitted to a reader/writer. Furthermore, the UID obtainment command is transmitted only to a reader/writer that reads the unique ID of an article stored in a shelf the door of which is open at a specified angle or more, whereby the UID obtainment command can be prevented from being unnecessarily transmitted to a reader/writer, and at the same time, an article taken out of the shelf can be grasped/managed in real time.

### Industrial Applicability

The present invention is applicable to systems in general, such as arrival/storage operations, inventory management operations, shipment/dispatching operations, etc., for managing an article to which a wireless tag is attached.

## Claims

1. An article managing system having a wireless tag attached to an article, a reader/writer for reading a unique ID of the wireless tag with a wireless communication via an antenna, and managing means for instructing the reader/writer to obtain the unique ID of the wireless tag, comprising:
deciding means for deciding a reader/writer to which a UID obtainment command is transmitted; and
controlling means for transmitting the UID obtainment command to the reader writer decided by said deciding means.

2. The article managing system according to claim 1, wherein
said deciding means comprises
a combination table for storing combination data of reader/writers to which the UID obtainment command can be simultaneously transmitted, and
first selecting means for deciding one or a plurality of reader/writers set in the combination data as reader/writers, to which the UID obtainment command is transmitted, by referencing the combination data within the combination table.

3. The article managing system according to claim 1, wherein:
the article is stored in a shelf having a door; and
said deciding means comprises
monitoring means for monitoring an opening/closing state of the door of the shelf, and
second selecting means for deciding a reader/writer obtaining a unique ID of a wireless tag of an article stored in the shelf, the door of which is open, as a reader/writer, to which the UID obtainment command is transmitted, based on a result of detection of said detecting means.

4. The article managing system according to claim 3, wherein
said monitoring means comprises
a sensor for detecting opening/closing of the door provided in the shelf, and
detecting means for detecting that the door of the shelf is open, based on a result of detection of said sensor.

5. The article managing system according to claim 4, wherein said sensor is placed in the shelf.

6. The article managing system according to claim 5, wherein
said detecting means is provided within the managing means, and said sensor and said detecting means are connected with a communication line.

7. The article managing system according to claim 1, wherein:
the article is stored in a shelf having a door; and
said deciding means comprises
detecting means for detecting an opening/closing angle of the door of the shelf, and
third selecting means for deciding a reader/writer obtaining a unique ID of a wireless tag of an article stored in a shelf having a door, which is open at a specified angle or more, as a reader/writer, to which the UID obtainment command is transmitted, based on a result of detection of said detecting means.

8. The article managing system according to claim 7, wherein
said third selecting means comprises
an angle setting table for storing the instructed angle, and
determining means for determining that the door is open at the specified angle or more by making a comparison between the specified angle stored in said angle setting table and the opening/closing angle of the door, which is input from said detecting means.

9. The article managing system according to claim 7, wherein
said detecting means is placed between the shelf and the door.

10. The article managing system according to claim 9, wherein
said detecting means is provided within the managing means, and said detecting means and said third selecting means are connected with a communication line.
